Europäisches Patentamt

European Patent Office

Office européen des brevets

(11) Veröffentlichungsnummer: **0 207 321**
**B1**

(12) **EUROPÄISCHE PATENTSCHRIFT**

(45) Veröffentlichungstag der Patentschrift:
18.10.89

(51) Int. Cl.⁴: **G01F 1/32, G01P 5/01**

(21) Anmeldenummer: **86107652.9**

(22) Anmeldetag: **05.06.86**

(54) Vorrichtung zur Durchflussmessung.

(30) Priorität: **03.07.85 DE 3523760**

(43) Veröffentlichungstag der Anmeldung:
**07.01.87 Patentblatt 87/2**

(45) Bekanntmachung des Hinweises auf die Patenterteilung:
**18.10.89 Patentblatt 89/42**

(84) Benannte Vertragsstaaten:
**AT FR GB IT NL**

(56) Entgegenhaltungen:
EP-A- 0 032 059
WO-A-82/03911
DD-A- 127 531
US-A- 3 680 375

(73) Patentinhaber: RMG electronic GmbH,
Richard-Wagner-Ring 14, D-6710 Frankenthal(DE)

(72) Erfinder: **Schmitt, Rolf, Dipl.-Ing.,**
**Hans-Purrmann-Strasse 5, D-6710 Frankenthal(DE)**

(74) Vertreter: **Lichti, Heiner, Dipl.-Ing. et al, Patentanwälte**
**Dr. Ing. Hans Lichti Dipl.-Ing. Heiner Lichti Dipl.-Phys.**
**Dr.rer.nat. Jost Lempert Durlacher**
**Strasse 31 Postfach 410760, D-7500 Karlsruhe 41(DE)**

## Beschreibung

Die Erfindung betrifft eine Vorrichtung zur Messung der Strömungsgeschwindigkeit fluider Medien mit einem in der Strömung starr angeordneten, stabförmigen Störkörper zylindrischer Anströmfläche an dem sich periodisch ablösende Wirbel bilden, und einer Einrichtung mit einem Sensor zur Aufnahme der von der Strömungsgeschwindigkeit abhängigen Ablösefrequenz der Wirbel.

Vorrichtungen des vorgenannten Aufbaus (vgl. z.B. US-A 3 680 375) beruhen auf dem Prinzip der Karman'schen Wirbelstraße. Diese Phänomen wurde von Karman an zylindrischen Stäben festgestellt und strömungstechnisch untersucht. Danach bilden sich bei turbulenter Strömung im Schatten des zylindrischen Stabs an gegenüberliegenden Seiten Wirbel, die sich abwechselnd an der einen und der anderen Seite ablösen und stromabwärts wandern. Die Ablösefrequenz der Wirbel kann mit Sensoren unterschiedlicher Art, z. B. Druckaufnehmer, Hitzdrahtsensoren etc., gemessen werden. Die Ablösefrequenz ist ein Maß für die Strömungsgeschwindigkeit des fluiden Mediums, wobei diese Effekte sowohl in Gas- als auch Flüssigkeitsströmungen eintreten. In einem gewissen Bereich der Reynoldszahl ist die Ablösefrequenz dem Durchfluß proportional, so daß bei entsprechender Dimensionierung und Anordnung des Störkörpers in der Strömung eine störungsfreie und genaue Messung möglich ist.

Außerhalb des erwähnten Bereichs der erwähnten Reynoldszahl wird die Wirbelbildung von dynamischen Störungen aus der Strömung überlagert mit der Folge, daß in diesen Bereichen keine Proportionalität mehr zwischen Durchfluß und Ablösefrequenz gegeben ist. Um in diesen Bereichen, vor allem bei großen Reynoldszahlen diesen Effekt überhaupt noch zur Durchflußmessung ausnutzen zu können, hat man bei Meßgeräten dieses Prinzips in der Vergangenheit versucht, die Form des Störkörpers zu optimieren, um eine zumindest reproduzierbare Abhängigkeit der Ablösefrequenz von der Strömungsgeschwindigkeit über einen größeren Reynoldszahl-Bereich zu erhalten. So ist es bekannt, den Störkörper als halben Kreiszylinder mit wiederum zylindrischer Anströmfläche oder einen prismatischen Störkörper vorzusehen, der von einer stromaufwärts liegenden linearen Kante mit ebenen Anströmflächen stromabwärts reicht (DE-OS 20 38 569). Der erhöhte Strömungswiderstand eines solchen Störkörpers soll durch nachgeschaltete Einbauten, wie quergestellte Scheiben oder dgl., reduziert werden. Ferner ist es bekannt (US-PS 3 116 639), statt vollzylindrischer Störkörper solche mit einer teilelliptischen Anströmfläche vorzusehen, und die Ablösefrequenz durch einen fluchtend hinter dem Störkörper angeordneten, schwingfähig gelagerten Sensor aufzunehmen. Weiterhin ist es bekannt (DE-PS 19 26 798) in die Strömung eine weitgehend senkrecht dazu verlaufende, plattenförmige Staufläche anzuordnen, die eine symmetrisch angesetzte, stromabwärts reichende Leitfläche aufweist. Alle vorbekannten Ausführungsformen weisen in mehr oder minder großem Umfang folgende Nachteile auf:

Durch die Formgebung des Störkörpers entsteht ein erheblicher Druckverlust. Zusätzlich wird der effektive Rohrquerschnitt durch den Störkörper erheblich eingeschränkt.

Die Meßaufnahme wird durch Pulsationen in der Strömung, die von Strömungserzeugern, Rohrkrümmern, Einbauten wie Ventilen oder dgl., entstehen, beeinträchtigt, da das Strömungsprofil gestört wird, was unter Umständen zu kurzzeitigen Abrissen in der Wirbelstraße führen kann. Hieraus wiederum ergeben sich Meßfehler. Um diese einigermaßen zu vermeiden, müssen lange Einlaufstrecken mit Strömungsgleichrichtern zur Erzeugung eines gleichmäßigen Geschwindigkeitsprofils bei turbulenter Strömung vorgesehen werden. Bei vielen meßtechnischen Aufgaben lassen sich solche Einlaufstrecken nicht verwirklichen. Die Form und Dimensionierung der Störkörper führt zu Wandeinflüssen, die gleichfalls das Meßergebnis verfälschen. Hieraus wiederum leitet sich die Forderung ab, die Meßkörpergröße in einem bestimmten Verhältnis zum Rohrleitungsdurchmesser auszubilden, so daß eine entsprechende Vielzahl von Störkörpern für die verschiedenen Rohr-Nennweiten zur Verfügung gestellt werden muß.

Der Erfindung liegt die Aufgabe zugrunde, einen Störkörper zu schaffen, der in einem weiten Reynoldszahl-Bereich eine proportionale Abhängigkeit zwischen Durchfluß und Ablösefrequenz zeigt und bei geringem Strömungswiderstand unempfindlich gegen die Überlagerung dynamischer Strömungsvorgänge ist.

Ausgehend von der eingangs genannten Vorrichtung mit einem stabförmigen Störkörper mit zylindrischer Anströmfläche wird diese Aufgabe dadurch gelöst, daß der Störkörper von einem Scheitel ausgehend stromabwärts nach beiden Seiten symmetrisch abgebogen ist.

Beim erfindungsgemäß ausgebildeten Störkörper kann es sich im einfachsten Fall um einen dünnen kreiszylindrischen Stab handeln, der von dem Scheitel ausgehend nach beiden Seiten in Strömungsrichtung abgebogen ist. Ein solcher Stab weist naturgemäß einen sehr geringen Strömungswiderstand auf, da er der Strömung ausschließlich zylindrische Flächen kleinen Durchmessers entgegensetzt. Praktische Versuche haben gezeigt, daß bei einem solchen Störkörper eine einwandfreie Wirbelablösung über einen großen Reynoldszahl-Bereich und damit eine direkt proportionale Abhängigkeit zwischen Ablösefrequenz und Strömungsgeschwindigkeit gegeben ist. Es hat sich ferner gezeigt, daß die Wirbelablösung auch durch überlagerte Pulsationen nicht oder nur so unwesentlich beeinflußt wird, daß nach wie vor eine einwandfreie Meßaufnahme möglich ist. Dies gilt insbesondere für den Bereich hinter dem Scheitel des Störkörpers, wo sich eine beruhigte Strömungszone ausbildet, in der die Strömungsgeschwindigkeit annähernd Null ist. Dort erfolgt im wesentlichen nur eine Oszillation quer zur Strömungsrichtung. Es wird deshalb mit Vorzug der Sensor auch in diesem Bereich hinter dem Scheitel des Störkörpers angeordnet.

Gemäß einem weiterbilaenden Merkmal der Erfindung ist hinter dem Störkörper eine in dessen Ebene liegende Ableitfläche angeordnet, die im einfachsten Fall als dünne Platte ausgebildet sein kann. Diese Ableitfläche führt zu einer Lenkung der Strömung hinter dem Störkörper und zu einer Strömungsberuhigung, insbesondere wird eine wechselseitige Beeinflussung der beiden Wirbelstraßen, die bei überlagerten Pulsationen eintreten kann, vermieden. Es hat sich weiter gezeigt, daß ein solcher Störkörper auch ohne Einlauf- und Gleichrichterstrecke zu einwandfreien Meßergebnissen führt. Er kann sogar als Sonde zur Messung dynamischer Strömungsvorgänge im Abströmbereich von Ventilatoren, Pumpen oder dgl. eingesetzt werden. Ferner ist die Qualität der Messung weitgehend unabhängig von dem verwendeten Sensorsystem. Hierfür kommen Thermistoren, Dehnungsmeßstreifen, Druckaufnehmer, Vibrationssensoren oder Schallaufnehmer (für Luftströmungen) in Frage. Ferner ist es möglich, ein oder mehrere Meßaufnehmer hintereinander zu schalten, wie es gleichfalls möglich ist, mehrere Störkörper hintereinander anzordnen, um einen Strömungsverlauf in Strömungsrichtung durchzumessen. Schließlich ist es möglich, über den Querschnitt einer Strömung mehrere Störkörper anzuordnen und die vektorielle Geschwindigkeitsverteilung in einem Strömungsprofil aufzunehmen.

Gemäß einer bevorzugten Ausführungsform weist der Störkörper an seinem Scheitel einen kleinen Krümmungsradius auf, so daß auch quer zur Strömung eine Art zylindrische Anströmfläche entsteht, die wiederum den Strömungswiderstand reduziert und ferner für eine einwandfreie Wirbelablösung sorgt. Dabei kann der Krümmungsradius etwa das Drei- bis Zehnfache des Radius' der zylindrischen Anströmfläche betragen.

Bei einem anderen Ausführungsbeispiel weist der Störkörper an seinem Scheitel einen geradlinigen, zur Anströmrichtung senkrechten Abschnitt auf, an den sich dann die nach hinten abgebogenen Aschnitte anschließen.

Auch die stromabwärts gebogenen Abschnitte des Störkörpers verlaufen zweckmäßigerweise linear, wobei deren Winkel gegenüber der Strömungsrichtung zwischen 10° und 80° betragen kann. Ein solcher Störkörper läßt sich in einfacher Weise durch Biegen eines zylindrischen Stabs um ein zylindrisches Auflager herstellen.

Statt dessen kann es zur weiteren Verbesserung der Schwingungsstabilität auch vorteilhaft sein, den Störkörper insgesamt parabelförmig auszubilden.

In weiterer vorteilhafter Ausbildung der Erfindung ist die Ableitfläche an ihrer stromaufwärts liegenden Seite mit den Enden der abgebogenen Abschnitte des Störkörpers verbunden. Störkörper und Ableitfläche bilden somit eine Baueinheit, die ohne Schwierigkeiten in eine Rohrleitung eingesetzt und auch als Meßsonde für den nur zeitweiligen Meßbetrieb eingebaut werden kann.

Die Ableitfläche ist vorzugsweise als dünnwandige Platte mit zweckmäßigerweise rechteckigem Querschnitt ausgebildet, wobei sie an der mit dem Störkörper verbundenen Kante die gleiche Länge aufweist, wie die entsprechende Querausdehnung des Störkörpers. Die Dicke der Platte ist geringer als der Anströmquerschnitt des Störkörpers.

Die vorgenannte Ausführungsform gibt ferner die Möglichkeit, den Sensor unmittelbar an der Ableitfläche oder aber in einem Fenster derselben anzuordnen, beispielsweise in Form einer Fahne, die mit der Ableitfläche beiderseits über Dehnungsmeßstreifen aufgenommen werden. Damit ist eine komplette Baueinheit aus Störkörper, Ableitfläche und Sensor gegeben, die den Einsatz und Einbau in besonderem Maß vereinfacht.

Für spezielle Meßprobleme, nämlich für das Erfassen von Rückströmungen kann stromabwärts des Störkörpers ein gleicher Störkörper in umgekehrter Orientierung vorgesehen sein, wobei die beiden Störkörper vorzugsweise durch die Ableitfläche miteinander verbunden sind. Auf diese Weise ist auch eine Durchflußmessung in beiden Strömungsrichtungen mittels eines einzigen Bauteils und eines einzigen Sensors ohne jegliche Umrüstarbeiten möglich.

Nachstehend ist die Erfindung anhand von in der Zeichnung wiedergegebenen Ausführungsbeispielen erläutert. In der Zeichnung zeigen:

Figur 1 einen Auschnitt aus einem Rohr mit eingebautem Störkörper und Sensor in perspektivischer Ansicht;

Figur 2 einen Horizontalschnitt durch das Rohr gemäß Figur 1;

Figur 3 eine vergrößerte Ansicht des Störkörpers gemäß Figur 1 und 2;

Figur 4 eine um 90° versetzte Ansicht des Störkörpers gemäß Figur 3;

Figur 5 eine der Figur 3 entsprechende Ansicht einer anderen Ausführungsform des Störkörpers;

Figur 6 eine der Figur 3 entsprechende Ansicht einer weiteren Ausführungsform des Störkörpers;

Figur 7 eine um 90° versetzte Ansicht des Störkörpers gemäß Figur 6 und

Figur 8 eine der Figur 6 entsprechende Ansicht einer weiteren Ausführungsform des Störkörpers.

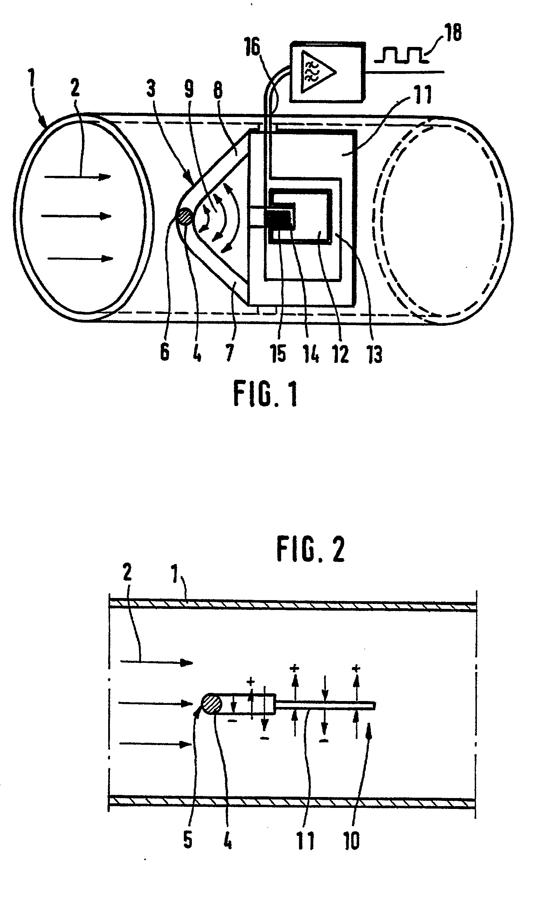

In Figur 1 ist ein Ausschnitt aus einem kreiszylindrischen Rohr 1 gezeigt, das zur Führung eines strömenden, fluiden Mediums (Gas oder Flüssigkeit) dient. Die Strömungsrichtung ist mit Richtungspfeilen 2 angedeutet.

In das Rohr 1 ist ein Störkörper 3 ortsfest und unbeweglich eingesetzt, der beim wiedergegebenen Ausführungsbeispiel einen zylindrischen Querschnitt 4 und damit auch eine teilzylindrische Anströmfläche 5 (Figur 2) aufweist. Der Störkörper weist einen in der Strömungsachse liegenden Scheitel 6 auf, von dem aus er nach beiden Seiten in Strömungsrichtung abgebogen ist, wobei beim wiedergegebenen Ausführungsbeispiel die nach hinten abgebogenen Abschnitte 7 und 8 geradlinig verlaufen. Der Störkörper 3 liegt mit seinem Scheitel 6 und den abgebogenen Abschnitten 7, 8 in einer strömungsparallelen Ebene und erstreckt sich mit den abgebogenen Abschnitten etwas über den gesamten Querschnitt des Rohrs 1. Dieser Störkörper kann beispielsweise aus einem zylindrischen Stab geringen Durchmessers durch mittiges Abbiegen um ein zylindrisches Widerlager hergestellt werden.

Hinter dem Störkörper, insbesondere hinter dessen Scheitel 6 entstehen in der mit 9 bezeichneten Zone Wirbel, die sich periodisch an beiden Seiten des Störkörpers ablösen, wie dies in Figur 2 mit Vektoren angedeutet ist.

Um eine gegenseitige Beeinflussung der beiden Wirbelstraßen zu vermeiden, ist hinter dem Störkörper 3 eine Ableitfläche 10 in Form eines dünnen Plättchens 11 angeordnet, die die beiden Wirbelstraßen voneinander trennt und beim gezeigten Ausführungsbeispiel an den freien Enden der Abschnitte 7, 8 des Störkörpers 3 befestigt ist.

Als Sensor zur Aufnahme der Ablösefrequenz ist bei dem in Figur 1 und 2 wiedergegebenen Ausführungsbeispiel eine schwingfähige Fahne 12 vorgesehen, die innerhalb eines Fensters 13 des Plättchens 11 angeordnet und an ihrer stromaufwärts liegenden Kante über eine folienartige Aufhängung 14 schwingfähig gelagert ist. Die Fahne 12 folgt den von den Wirbeln abwechselnd einwirkenden Druckimpulsen, wobei sie quer zur Strömungsrichtung schwingt. Die Schwingfrequenz wird über aufgeklebte Dehnungsmeßstreifen 15 aufgenommen, die die durch die Schwingung erzeugten Dehnungen in elektrisch meßbare Widerstandsänderungen umformen, die über elektrische Anschlüsse 16 aufgenommen und über eine Auswerteelektronik 17 in eine digitale Impulsfolge 18 umgewandelt werden.

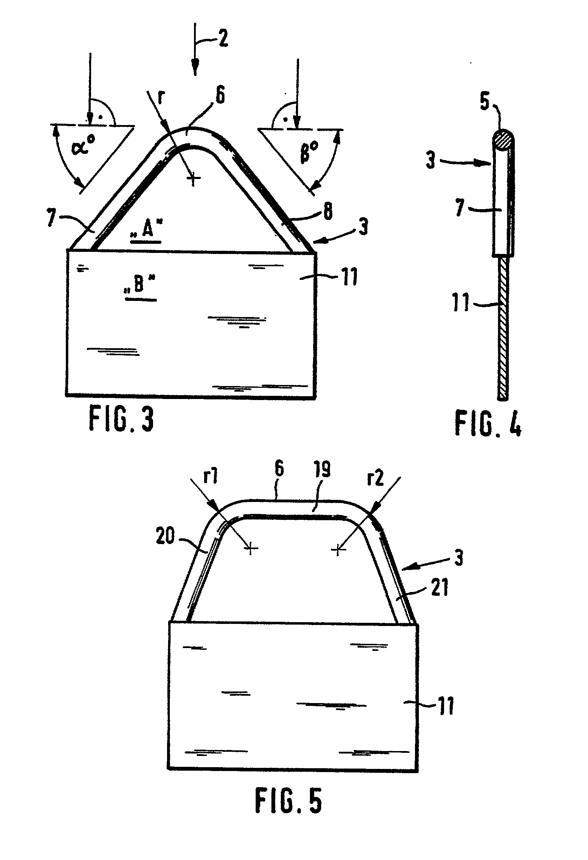

In Figur 3 und 4 ist der Störkörper gemäß Figur 1 und 2 vergrößert wiedergegeben. Wie bereits gesagt, ist er aus einem Stab zylindrischen Querschnittes und relativ geringen Durchmessers hergestellt. Der Krümmungsradius $r$ beträgt beim wiedergegebenen Ausführungsbeispiel etwa das Fünffache des Zylinderradius' des Stabs. Die in der Zeichnung als geradlinig wiedergegebenen, nach hinten abgebogenen Abschnitte 7, 8 können statt dessen zusammen mit dem Scheitel 6 auch parabelförmig ausgebildet sein. Beim gezeigten Ausführungsbeispiel weisen die Abschnitte 7, 8 gegenüber einer Ebene senkrecht zur Strömungsrichtung 2 einen Winkel $\alpha = \beta$ auf, der in diesem Fall etwa 45° beträgt. An die freien Enden der Abschnitte 7, 8 ist das als Ab-leitfläche wirkende Plättchen 11 befestigt, das, wie insbesondere Figur 4 zeigt, eine nennenwert geringere Dicke als der Durchmesser des Störkörpers 3 aufweist.

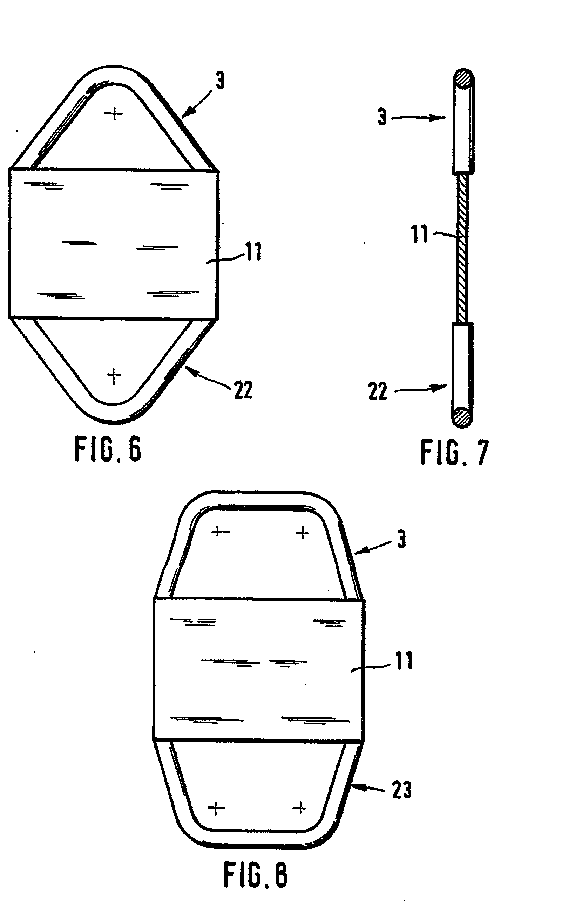

Das Ausführungsbeispiels gemäß Figur 5 unterscheidet sich von dem der Figuren 3 und 4 dadurch, daß der Störkörper 3 im Bereich des Scheitels 6 einen geradlinigen Abschnitt 19 aufweist, an den die stromabwärts symmetrisch abgebogenen Abschnitte 20, 21 anschließen. Die Krümmungsradien $r_1$ und $r_2$ zwischen den Abschnitten 20 bzw. 21 und dem geradlinigen Abschnitt 19 sind gleich. Ferner ist auch hier an den freien Enden der Abschnitte 20, 21 das die Ableitfläche bildende Plättchen 11 befestigt. Das Ausführungsbeispiel gemäß den Figuren 6 und 7 unterscheidet sich von dem der Figuren 3 und 4 lediglich dadurch, daß an der dem Störkörper 3 gegenüberliegenden Seite ein Störkörper 22 identischer Kontur in entgegengesetzter Orientierung angebracht ist. Desgleichen zeigt Figur 8 eine gegenüber Figur 5 abgewandelte Ausführungsform mit einem Störkörper 23 entgegengesetzter Ausrichtung, wobei beide Störkörper über das Plättchen 11 miteinander verbunden sind.

## Patentansprüche

1. Vorrichtung zur Messung der Strömungsgeschwindigkeit fluider Medien mit einem in der Strömung starr angeordneten stabförmigen Störkörper (3) mit zylindrischer Anströmfläche (5), an dem sich periodisch ablösende Wirbel bilden, und einer Einrichtung mit einem Sensor (15) zur Aufnahme der von der Strömungsgeschwindigkeit abhängigen Ablösefrequenz der Wirbel, dadurch gekennzeichnet, daß der Störkörper (3) von einem Scheitel (6) ausgehend stromabwärts nach beiden Seiten symmetrisch abgebogen ist.

2. Vorrichtung nach Anspruch 1, dadurch gekennzeichnet, daß hinter dem Störkörper (3) eine in dessen Ebene liegende Ableitfläche (11) angeordnet ist.

3. Vorrichtung nach Anspruch 1 oder 2, dadurch gekennzeichnet, daß der Störkörper (3) an seinem Scheitel (6) einen kleinen Krümmungsradius aufweist.

4. Vorrichtung nach Anspruch 3, dadurch gekennzeichnet, daß der Krümmungsradius das Drei- bis Zehnfache des Radius' der zylindrischen Anströmfläche (5) beträgt.

5. Vorrichtung nach Anspruch 1 oder 2, dadurch gekennzeichnet, daß der Störkörper (3) an seinem Scheitel (6) einen geradlinigen, zur Strömungsrichtung senkrechten Abschnitt (19) und daran anschließend symmetrisch stromabwärts abgebogene Abschnitte (20, 21) aufweist.

6. Vorrichtung nach einem der Ansprüche 1 bis 5, dadurch gekennzeichnet, daß die stromabwärts gebogenen Abschnitte (7, 8; 20, 21) des Störkörpers (3) linear verlaufen.

7. Vorrichtung nach einem der Ansprüche 1 bis 6, dadurch gekennzeichnet, daß der Winkel der abgebogenen Abschnitte (7, 8; 20, 21) gegenüber der Strömungsrichtung zwischen 10° und 80° beträgt.

8. Vorrichtung nach einem der Ansprüche 1 bis 5, dadurch gekennzeichnet, daß der Störkörper (3) insgesamt parabelförmig ausgebildet ist.

9. Vorrichtung nach einem der Ansprüche 1 bis 8, dadurch gekennzeichnet, daß die Ableitfläche (11) an ihrer stromaufwärts liegenden Seite mit den Enden der abgebogenen Abschnitte (7, 8; 20, 21) des Störkörpers (3) verbunden ist.

10. Vorrichtung nach einem der Ansprüche 1 bis 9, dadurch gekennzeichnet, daß die Ableitfläche (11) als dünnwandige Platte ausgebildet ist, deren Dicke geringer ist als der Anströmquerschnitt des Störkörpers (3).

11. Vorrichtung nach einem der Ansprüche 1 bis 10, dadurch gekennzeichnet, daß die Platte (11) rechteckig ausgebildet ist.

12. Vorrichtung nach einem der Ansprüche 1 bis 11, dadurch gekennzeichnet, daß der Sensor (12) unmittelbar hinter dem Scheitel (6) des Störkörpers (3) angeordnet ist.

13. Vorrichtung nach einem der Ansprüche 1 bis 12, dadurch gekennzeichnet, daß der Sensor (15) an der Ableitfläche (11) angeordnet ist.

14. Vorrichtung nach Anspruch 13, dadurch gekennzeichnet, daß die Ableitfläche (11) in Flucht zum Scheitel (6) des Störkörpers (3) eine schwingfähige oder schwingfähig aufgehängte Fahne (12) aufweist und als Sensor wenigstens ein die Fahne mit der Ableitfläche verbindender Dehnungsmeßstreifen (15) vorgesehen ist.

15. Vorrichtung nach Anspruch 14, dadurch gekennzeichnet, daß die Fahne (12) in einem Fenster (13) der Ableitfläche (11) angeordnet ist.

16. Vorrichtung nach einem der Ansprüche 1 bis 15, dadurch gekennzeichnet, daß stromabwärts des Störkörpers (3) ein gleicher Störkörper (22, 23) in umgekehrter Orientierung vorgesehen ist.

17. Vorrichtung nach einem der Ansprüche 1 bis 16, dadurch gekennzeichnet, daß die beiden Störkörper (3; 22, 23) durch die Ableitfläche (11) verbunden sind.

## Revendications

1. Dispositif de mesure du débit du courant de milieux fluides comportant un obstacle (3) en forme de barreau disposé de façon rigide dans le courant, présentant vers l'amont une surface cylindrique d'attaque (5) sur laquelle se forment des tourbillons qui se détachent périodiquement, et un dispositif comportant un capteur (15) pour détecter la fréquence de détachement des tourbillons qui dépendant du débit, caractérisé en ce que l'obstacle (3) est recourbé symétriquement à partir d'un sommet (6) vers l'aval sur les deux côtés.

2. Dispositif selon la revendication 1, caractérisé en ce qu'est disposée derrière l'obstacle (3) une surface de déviation (11) située dans le plan de celui-ci.

3. Dispositif selon la revendication 1 ou 2, caractérisé en ce que l'obstacle (3) présente sur son sommet (6) un petit rayon de courbure.

4. Dispositif selon la revendication 3, caractérisé en ce que le rayon de courbure est égal à trois à dix fois le rayon de la surface cylindrique d'attaque (5).

5. Dispositif selon la revendication 1 ou 2, caractérisé en ce que l'obstacle (3) présente sur son sommet (6) une partie rectiligne (19) perpendiculaire à la direction du courant ainsi que des parties (20, 21) recourbées symétriquement vers l'aval qui s'y raccordent.

6. Dispositif selon l'une des revendications 1 à 5, caractérisé en ce que les parties (7, 8; 20, 21) de l'obstacle (3) recourbées vers l'aval sont de tracé linéaire.

7. Dispositif selon l'une des revendications 1 à 6, caractérisé en ce que l'angle des parties recourbées (7, 8; 20, 21) par rapport à la direction du courant est compris entre 10° et 80°.

8. Dispositif selon l'une des revendications 1 à 5, caractérisé en ce que l'obstacle (3) présente une structure d'ensemble parabolique.

9. Dispositif selon l'une des revendications 1 à 8, caractérisé en ce que la surface de déviation (11) est reliée sur sa face tournée vers l'amont aux extrémités des parties recourbées (7, 8; 20, 21) de l'obstacle (3).

10. Dispositif selon l'une des revendications 1 à 9, caractérisé en ce que la surface de déviation (11) consiste en une plaque à paroi mince dont l'épaisseur est plus faible que la section transversale d'attaque de l'obstacle (3).

11. Dispositif selon l'une des revendications 1 à 10, caractérisé en ce que la plaque (11) est de structure rectangulaire.

12. Dispositif selon l'une des revendications 1 à 11, caractérisé en ce que le capteur (12) est disposé immédiatement derrière le sommet (6) de l'obstacle (3).

13. Dispositif selon l'une des revendications 1 à 12, caractérisé en ce que le capteur (15) est disposé sur la surface de déviation (11).

14. Dispositif selon la revendication 13, caractérisé en ce que la surface de déviation (11) en affleurement avec le sommet (6) de l'obstacle (3) présente une palette (12) oscillante ou suspendue de façon oscillante et comporte comme capteur au moins une bande (15) à jauge de contrainte reliant la palette à la surface de déviation.

15. Dispositif selon la revendication 14, caractérisé en ce que la palette (12) est disposée dans une fenêtre (13) de la surface de déviation (11).

16. Dispositif selon l'une des revendications 1 à 15, caractérisé en ce qu'en aval de l'obstacle (3) se trouve un obstacle analogue (22, 23) d'orientation inverse.

17. Dispositif selon l'une des revendications 1 à 16, caractérisé en ce que les deux obstacles (3; 22, 23) sont reliés par la surface de déviation (11).

## Claims

1. Device for measuring the flow rate of fluid media with a rod-like interfering body (3) having a cylindrical incident flow surface (5) and rigidly arranged in the flow and generating periodically separating vortices, and with means with a sensor (15) for receiving the vortex separating frequency dependent on the flow rate, characterized in that, starting from an apex (6), the interfering body (3) is bent away symmetrically downstream and to either side.

2. Device according to claim 1, characterized in that a diversion surface (11) is located behind the interfering body (3) in the plane thereof.

3. Device according to claims 1 or 2, characterized in that at its apex (6) the interfering body (3) has a small radius of curvature.

4. Device according to claim 3, characterized in that the radius of curvature is three to ten times the radius of the cylindrical incident flow surface (5).

5. Device according to claims 1 or 2, characterized in that at its apex (6) the interfering body (3) has a linear portion (19) at right angles to the flow direction and symmetrically connected in downstream manner thereto bent away portions (20, 21).

6. Device according to one of the claims 1 to 5, characterized in that the downstream bent portions (7, 8, 20, 21) of the interfering body (3) are linear.

7. Device according to one of the claims 1 to 6, characterized in that the angle of the bent away portions (7, 8, 20, 21) is between 10 and 80° with respect to the flow direction.

8. Device according to one of the claims 1 to 5, characterized in that the interfering body (3) is parabolic overall.

9. Device according to one of the claims 1 to 8, characterized in that at its downstream side the diversion surface (11) is connected to the ends of the bent away portions (7, 8, 20, 21) of the interfering body (3).

10. Device according to one of the claims 1 to 9, characterized in that the diversion surface (11) is formed from a thin-walled plate, whose thickness is smaller than the incident flow cross-section of the interfering body (3).

11. Device according to one of the claims 1 to 10, characterized in that the plate (11) is rectangular.

12. Device according to one of the claims 1 to 11, characterized in that the sensor (12) is positioned directly behind the apex (6) of the interfering body (3).

13. Device according to one of the claims 1 to 12, characterized in that the sensor (15) is arranged on the diversion surface (11).

14. Device according to claim 13, characterized in that the diversion surface (11) aligned with the apex (6) of interfering body (3) has an oscillatable or oscillatably suspended lug (12) and as the sensor is provided at least one strain gauge connecting the lug to the diversion surface.

15. Device according to claim 14, characterized in that the lug (12) is arranged in a window (13) of the diversion surface (11).

16. Device according to one of the claims 1 to 15, characterized in that an identical interfering body (22, 23) is provided with a reversed orientation downstream of interfering body (3).

17. Device according to one of the claims 1 to 16, characterized in that the two interfering bodies (3, 22, 23) are linked by the diversion surface (11).

EP 0 207 321 B1

FIG. 1

FIG. 2

EP 0 207 321 B1

FIG. 3

FIG. 4

FIG. 5

FIG. 6

FIG. 7

FIG. 8